Europäisches Patentamt

European Patent Office

Office européen des brevets

(19)

(11) **EP 1 052 785 A1**

(12) **EUROPEAN PATENT APPLICATION**

(43) Date of publication:
**15.11.2000 Bulletin 2000/46**

(51) Int Cl.7: **H04B 7/08**, H04B 7/185, H04B 7/10

(21) Application number: **99303664.9**

(22) Date of filing: **11.05.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventors:<br>• **Grayson, Mark**<br>  **London W4 2QT (GB)**<br>• **Meuniere, Vincent**<br>  **London W6 9BN (GB)** |
| (71) Applicant: **ICO Services Ltd.**<br>**London W6 9BN (GB)** | (74) Representative: **Read, Matthew Charles et al**<br>**Venner Shipley & Co.**<br>**20 Little Britain**<br>**London EC1A 7DH (GB)** |

(54) **Antenna diversity for a user terminal in a satellite telecommunication network**

(57)    The user terminal (UT 1) for a mobile cellular satellite network has an antenna configuration (24) which includes elements (45, 46) which provide selectable generally horizontal and vertical directive patterns (49, 50). Data concerning elevation angle is transmitted in a control channel (BCCH, SACCH) and used by UT1 to determine the elevation angle of the satellite (3a) so that an appropriate antenna directive pattern can be selected depending on elevation angle. In an alternative, maritime mode, each directive pattern is dedicated to a particular one of diverse communication paths from different satellites (3a, 3b) to the user terminal.

FIG. 13

## Description

This invention relates to controlling antenna diversity for a user terminal of a satellite telecommunications system.

Terrestrial mobile telecommunications systems are well known and a number of different systems have developed which operate according to different standards, both analog and digital. In Europe and the Far East, excluding Japan, and elsewhere, the digital Global System Mobile (GSM) network has become popular, whereas in the USA, networks which operate according to the IS-41 recommendations such as the Advanced Mobile Phone System (AMPS) and the Digital Advanced Mobile Phone System (DAMPS) are used. In Japan, the Personal Handiphone System (PHS) and the Personal Digital Communication (PDC) network are in use. More recently, proposals have been made for a Universal Mobile Telecommunications System (UMTS). These networks are all cellular and land-based but have differences in architecture and use different signalling protocols and transmission frequency bands.

Antenna diversity for mobile stations in a PLMN has been proposed and reference is directed to US 4 953 197. This uses spaced antennas in a vehicle to avoid the effects of fading. The quality of the signals received by the individual antennas is compared and the antenna which delivers the best signal quality is selected. Antenna diversity is also described in Microwave Mobile Communications, William C. Jakes IEEE pp 398 - 400.

Mobile telecommunication systems have been proposed that use satellite communication links between mobile user terminals and conventional terrestrial networks such as public switched telephone networks (PSTNs) and public land mobile networks (PLMNs). One network known as the IRIDIUM™ satellite cellular system is described in EP-A-0 365 885 and US Patent No. 5 394 561 (Motorola), which makes use of a constellation of so-called low earth orbit (LEO) satellites, that have an orbital radius of 780 km. Mobile user terminals such as telephone handsets establish a link to an overhead orbiting satellite, from which a call can be directed to another satellite in the constellation and then typically to a ground station which is connected to conventional land-based networks.

Alternative schemes which make use of so-called medium earth orbit (MEO) satellite constellations have been proposed with an orbital radius in the range of 10-20,000 km. Reference is directed to the ICO™ satellite cellular system described for example in GB-A-2 295 296. With this system, the satellite communications link does not permit communication between adjacent satellites. Instead, a signal from a mobile user terminal such as a mobile handset is directed firstly to the satellite and then directed to a ground station or satellite access node (SAN), connected to conventional land-based telephone networks. This has the advantage that many components of the system are compatible with known digital terrestrial cellular technology such as GSM. Also simpler satellite communication techniques can be used than with a LEO network. Reference is directed to "New Satellites for Personal Communications", Scientific American, April 1998, pp. 60 - 67, for an overview of LEO/MEO satellite networks.

In satellite communications networks, ground stations are located at different sites around the world in order to communicate with the orbiting satellites and local PLMNs. In the ICO™ system and others, a visitor location register is associated with each of the satellite ground stations to register locally the individual user terminals. The visitor location registers communicate with a home location register for the satellite network.

The satellite constellation can be configured so that for any location of user terminal on the earth, more than one satellite is at an elevation of more than 10 degrees above the horizon and hence two satellites are usually available for communication concurrently with the user terminal. The availability of more than satellite permits so-called diversity operations in which a traffic logical channel can be transmitted between the ground and the user terminal concurrently via two satellites, in two paths, to mitigate effects of blockage and fading. Diversity operation is described in GB-A-2 293 725, EP-A-0 837 568 and PCT/US96/19429.

In use, the satellites subtend an elevation angle at the user terminal that can vary from a few degrees above the horizon up to 90° i.e. directly above the user terminal, known in the art as the nadir. The antenna of the user terminal needs to have a sufficiently broad directive pattern to be able to receive and transmit signals to and from the satellite through a range of angles from the nadir down close to the horizon. Quadrifilar antennas have been proposed which have a substantially omni-directional directive pattern as described in EP 0 715 639. It has also been proposed to use a combination of antennas with different directive patterns. The present invention is concerned with an antenna configuration with more than one directive pattern and an improved way of using the directive patterns to achieve improved operational characteristics.

According to the invention there is provided a method of controlling antenna diversity of a user terminal for a satellite telecommunications network, wherein the user terminal includes an antenna configuration with different selectable directive patterns, the method including receiving system information via a satellite, the system information including data relating to the elevation of the satellite relative to the user terminal, and selecting the antenna directive pattern as a function of the data.

The data may be compared with a threshold value so that the directive pattern can be selected in dependence on the outcome of the comparison. The system information may comprise data relating to a reference for use in synchronising signals transmitted between the user terminal and the satellite, such as Z-arc data.

The data may be received at the user terminal in a control channel from the satellite such as a cell broadcast channel This may include data concerning the elevation of the satellite for other cells so that the antenna directive pattern to be used for another cell may be chosen on the basis of the data when a cell handover is to be carried out.

The invention also includes a user terminal for a satellite telecommunications system, including an antenna configuration with different selectable directive patterns, receiver circuitry to receive system information via a satellite, the system information including data relating to the elevation of the satellite relative to the user terminal, and means to select the antenna directive pattern as a function of the data.

The user terminal may include means for comparing the data with a threshold value and selecting the directive pattern in dependence on the outcome of the comparison.

The antenna configuration may include antenna elements for producing a lobe to be disposed generally vertically in use and a lobe to be disposed transversely thereof. These may be provided by a loop antenna element and a dipole antenna element although an electronically switchable or steerable array may alternatively be used.

The invention also includes in another aspect a method of controlling antenna diversity of a user terminal for a satellite telecommunications system wherein a communication traffic channel between the user terminal and a ground based network occurs over diverse paths and the user terminal includes an antenna configuration with different selectable directive patterns, the method including using the different directive patterns of the antenna configuration for the different paths respectively.

The method may include signalling to a remote location via the satellite to send a traffic channel to the user terminal such that traffic information is repeated over the two paths, and combining the received traffic information from the paths at the user terminal. The signals from the diverse paths may be received in respective diversity time windows at the user terminal, and the antenna directive patterns may be switched for the respective diversity windows.

The invention also includes a user terminal for a satellite telecommunications system wherein a communication traffic channel between the user terminal and a ground based network occurs over diverse paths, the user terminal including an antenna configuration with different selectable directive patterns, and means for using the different directive patterns of the antenna configuration for the different paths respectively.

In order that the invention may be more fully understood an embodiment thereof will now be described by way of example with reference to the accompanying drawings, in which:

Figure 1 is a schematic diagram of a satellite telecommunications system together with a local, land-based mobile telecommunications system, in accordance with the invention;

Figure 2 is a schematic diagram of the spot beam pattern produced by one of the satellites on the earth;

Figure 3 illustrates schematically different beam types and their associated cellular areas and Z-arcs, from the pattern shown in Figure 2;

Figure 4 is a schematic frequency/time diagram illustrating time slots for the FDMA transmission scheme;

Figure 5 is a schematic block diagram of the circuits of satellite 3a;

Figure 6 is a schematic diagram of the cell pattern produced by the spot beams of satellites 3a, 3b;

Figure 7 is a schematic diagram of a mobile user terminal;

Figure 8 is a schematic block diagram of the circuits of the user terminal shown in Figure 7;

Figure 9 is a schematic block diagram of SBS 1 shown in Figure 1;

Figure 10 is a schematic diagram of TDMA signals transmitted from between the satellites and the user terminal;

Figure 11 is a schematic diagram showing the relationship of the transmission path between a user terminal and satellite, referenced to a Z-arc;

Figure 12 is a schematic illustration of the satellite antenna 24 of UT 1;

Figure 13 illustrates schematically the relationship between path delay $T_o$ and satellite elevation angle; and

Figure 14 is a schematic flow diagram of a process performed at UT 1 to select an antenna element as a function of satellite elevation.

**Overview of network**

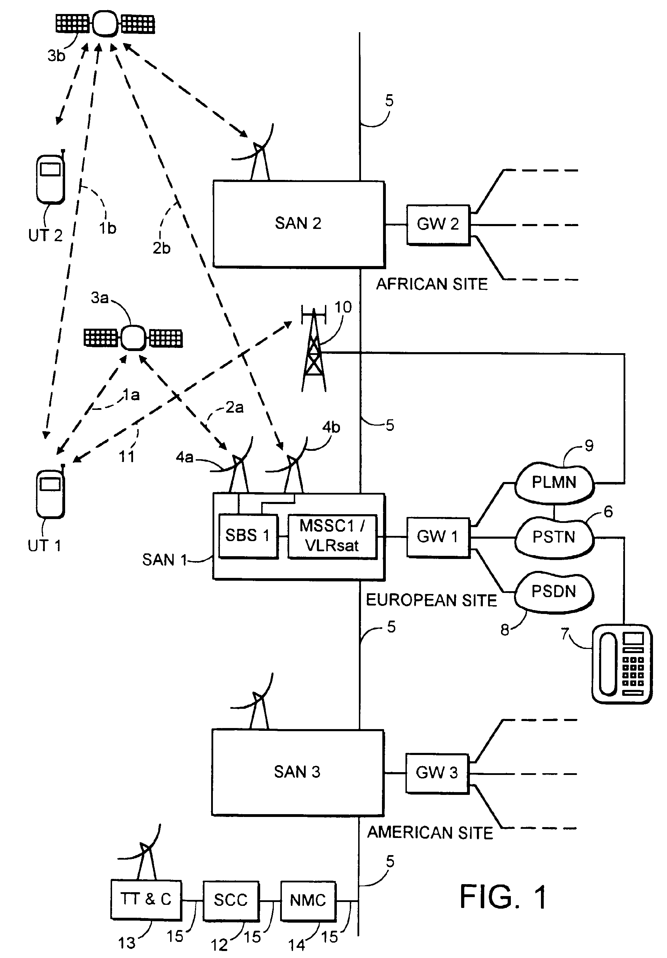

Referring to Figure 1, a schematic block diagram of a satellite mobile telecommunications network is shown corresponding to the ICO™ network. A mobile user terminal UT 1 in the form of a mobile telephone handset can communicate on a radio channel over a communication path 1a, 2a via an earth orbiting satellite 3a with a land-based satellite access node SAN 1. As shown schematically in Figure 1, SAN 1 is provided with a dish antenna arrangement that includes antenna 4a which can track the orbiting satellite 3a.

A number of the satellite access nodes SAN 1, 2, 3, etc are connected together to form a backbone network 5, which is connected through a number of gateways GW 1, 2, 3, etc to conventional land-based telephone networks. For example, the gateway GW 1, is connected to a land-based public switch telephone network (PSTN) 6, which permits connection to be made to a conventional telephone set 7. The gateway GW1 is additionally connected to a public switched data network (PSDN) 8 and a public land mobile network (PLMN) 9. Each of the gateways GW1, 2, 3 may comprise existing International Switching Centres (ISCs) or mobile switching centres (MSCs) of the type used in GSM mobile networks.

As shown in Figure 1, the handset UT 1 is a dual mode device which can also communicate with the conventional land-based mobile network PLMN 9, that is shown schematically to include a transceiver station 10 which establishes a duplex link 11 with the user terminal UT 1. In this example, the PLMN 9 is a GSM network. Thus the user can for example roam to the satellite network when out of range of the PLMN 9. For a fuller understanding of GSM, reference is directed to the various GSM Recommendations issued by the European Telecommunications Institute (ETSI).

The satellite network is designed to provide world-wide coverage and the satellite 3a forms part of a constellation of satellites, which may be arranged in several orbits. The satellites may be arranged in a MEO constellation, for example with an orbital radius of 10,355 km, although the invention is not restricted to a particular orbital radius. In one example, two orbits of five satellites are used, which can be shown to provide coverage of a major part of the surface of the earth, in which for a $10°$ satellite elevation angle, one satellite can be accessed by the mobile handset all of the time and two satellites can be accessed for at least 80% of the time, thereby providing more than one concurrent communication path to the user terminal from a particular SAN. Additional satellites may be included in the constellation in order to provide redundancy.

In this embodiment, two satellites 3a, 3b of the constellation are shown in a common orbit and the satellites are tracked by the antenna arrangement 4 of each SAN. The antenna arrangement 4 for each SAN may for example include five dish antennas to track satellites individually, although only two of the dish antennas 4a, 4b for SAN 1 are shown in Figure 1 and only one dish is shown for the other SANs, in order to simplify the drawing. The dish antennas permit diverse communication paths to be established between the SANs and an individual user terminals via different satellites. In this example, the first communication path 1a, 2a is set up between dish antenna 4a of SAN 1 and user terminal UT 1 via satellite 3a, and a second communication path 1b, 2b is set up between dish antenna 4b of SAN 1 and user terminal UT 1 via satellite 3b, thus providing first and second diverse paths for concurrent communication of signal traffic between the satellite and the user terminal.

The SANs are spaced around the earth in order to provide continuous coverage. In the example shown, SAN 1 may be located in Europe whereas SAN 2 may be located in Africa, SAN 3 in America and other SANs may be located elsewhere.

SAN 1 consists of a satellite base station SBS 1 which is coupled to the dish antenna arrangement 4 for tracking the satellites, the SBS 1 including transmitter and receiver circuits with amplifiers, multiplexers, demultiplexer and codecs, which will be described in more detail later. A mobile satellite switching centre MSSC 1 is coupled to SBS 1 and includes a satellite visitor location register $VLR_{SAT}$ 1. MSSC 1 couples communication signals to the backbone network 5 and to the SBS 1, so as to allow individual telephone calls to be established through the backbone network 5 and the duplex communication link 1, 2 via the satellites 3, to the mobile terminal UT 1. Also, MSSC 1 is connected to the gateway GW 1 so as to provide a connection to PLMN 9, PSDN 8 and PSTN 6. It will be understood that all the SANs are of similar construction with a respective $VLR_{SAT}$ to maintain a record of the subscribers registered, namely the identity of each user that is making use of the SAN 1 for signal communication.

In Figure 1, the SAN 2 is shown communicating with user terminal UT 2 via satellite 3b. For further details of the network, reference is directed to GB-A- 2 295 296 and EP-A-0 869 628.

The satellites 3a, 3b are in non geo-stationary orbits and comprise generally conventional hardware such as the Hughes HS 601. They may include features disclosed in GB-A-2 288 913.

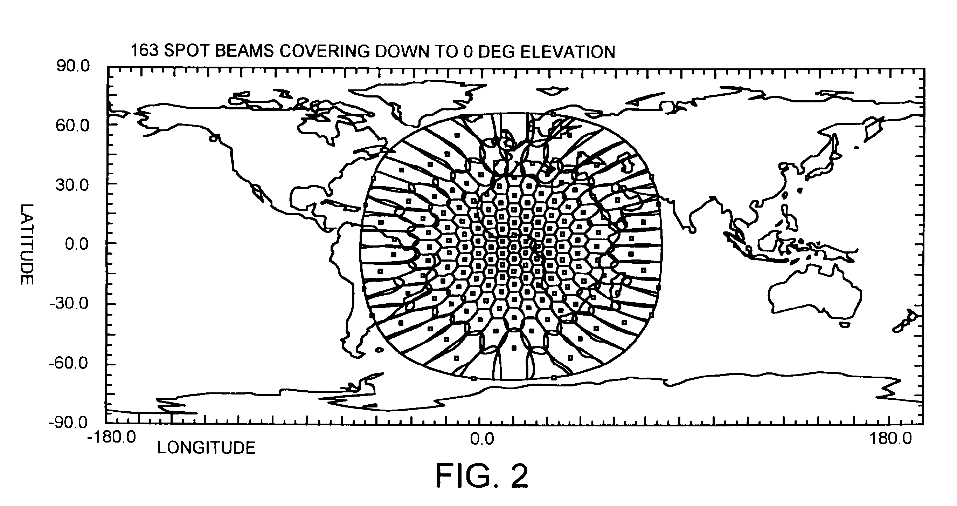

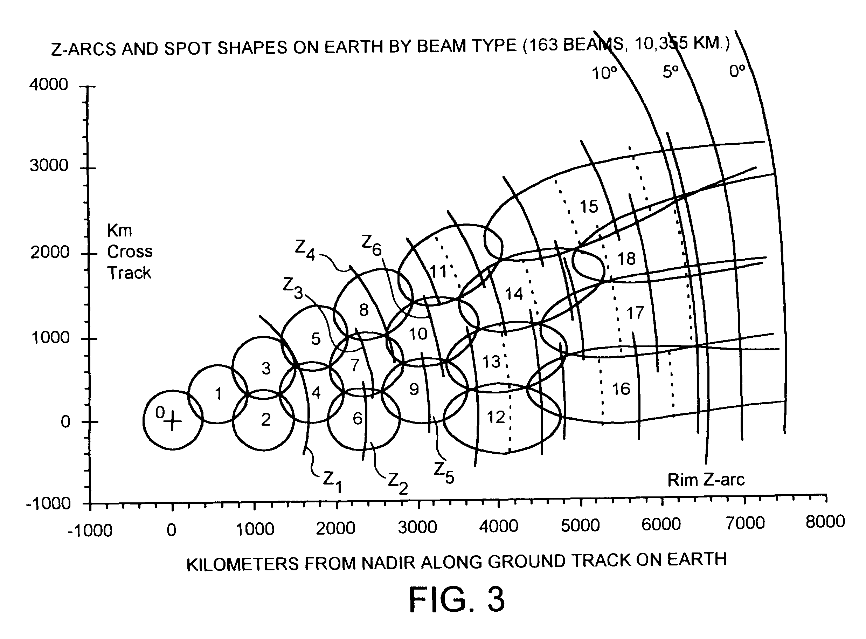

Each satellite 3a, 3b is arranged to generate an array of radio beams each with a footprint on the earth beneath the satellite, each beam including a number of different frequency channels and time slots as described in GB-A-2 293 725. The beams thus provide adjacent cellular areas which correspond to the cells of a conventional land-based mobile telephone network. Referring to Figure 2, in the ICO™ satellite mobile telephone system, each satellite 3a, 3b produces a fixed pattern of 163 spot beams, with the shapes of the spot beams varying as a result of the curvature of the earth to produce 19 different beam types (0 - 18), as shown in Figure 3.

The satellites are controlled by means of a satellite control centre (SCC) 12 and a telemetry tracking and control station (TT&C) 13, which are connected to a network management centre (NMC) 14 through a digital network 15 that is coupled to the backbone network 5. The SCC 12 and the TT&C 13 control operations of the satellites 3a, 3b, e.g. for setting the general transmission power levels and transponder input tuning, as directed by the NMC 14. Telemetry signals for the satellites 3a, 3b are received by the TT&C 13 and processed by the SCC 12 to ensure that the satellites are functioning correctly.

**Channel Configuration**

During a telephone call, each of the user terminals communicates with a respective SAN via the satellites. A full duplex communication path is provided between the UT and the SAN. As referred to herein, communication from the SAN to the UT via the satellite is referred to as a "downlink", and communication directed from the UT via the satellite to the SAN is referred to as an "uplink". As will be explained in more detail hereinafter, the signals may travel over diverse paths between UT 1 and SAN 1 via satellite 3a or 3b or both of them concurrently. The configuration is switchable between different diversity modes in which communication paths through one or the other or both of the satellites are used.

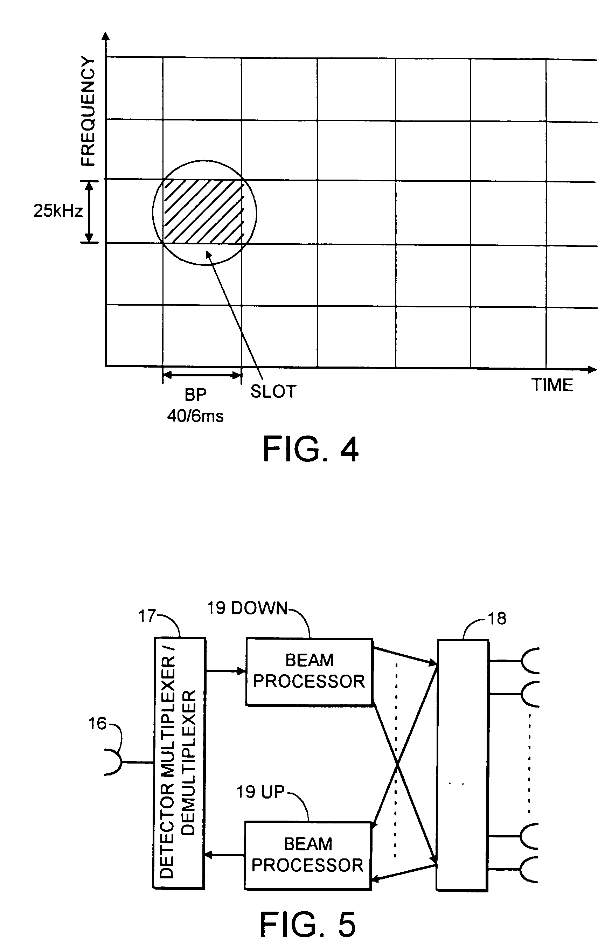

The general configuration of the transmitted signals is similar in some respects to those used for conventional GSM transmissions in a PLMN and makes use of a frequency diverse time division multiple access (TDMA) scheme. During a call, referred to herein as dedicated mode, speech transmission data is sent on a traffic channel TCH. Each TCH is provided with an associated slow-rate control channel or SACCH. The configuration of these channels in the TDMA scheme will now be described in more detail. The basic unit of transmission between the SAN and UT is a series of about 100 modulated digital symbols, which is referred to as a burst. Bursts each have a finite duration and occupy a finite part of the radio spectrum. Thus, they are sent in time and frequency windows which are referred to as slots. The slots are positioned e.g. every 25kHz and recur in time every 40/6 ms (6.667ms). The duration of each slot is referred to as a burst period or BP. A graphical representation of a slot in the time and frequency domain is shown in Figure 4.

Each TCH consists of one slot every 6 BP and comprises a cycle of 25 slots. The SACCH is multiplexed over 12 consecutive slots. Two SACCH blocks are transmitted for every 25 slot cycle.

It will be appreciated that with this configuration, 6 TCHs can be interleaved due to the fact that each TCH consists of a slot every 6 BP. The resulting interleaved structure thus provides a 40 ms frame of 6 TCHs every 6 BP.

For signalling at a faster rate, a fast associated control channel or FACCH is provided. This corresponds to a TCH but is dedicated specifically for fast signalling for example to provide system information to a user terminal to allow a cell handover to occur to a new cell.

Also, a downlink broadcast control channel BCCH is broadcast from each satellite to all UTs within a particular cell. The BCCH provides information which identifies the cell to the UT, which is received by the UT in idle mode i.e. when no call is being made. As each cell has is own BCCH, the relative signal strengths of the BCCHs at the UT can be used to determine which cell is to be used for TCH/SACCH communication with the UT. Other system information may be transmitted to the UTs of a particular cell in the BCCH in a similar manner to GSM. The BCCH message consists of a number e.g. 4 slots equally spaced every 100 BP.

A common downlink paging logical channel PCH is provided for each cell. This is used to transmit paging messages to a UT, for example to alert the user of the UT to an incoming call. Also an access grant logical channel AGCH indicates to the UT a channel allocated by the network, to be accessed by the UT for speech communication (TCH/SACCH) in order to receive the incoming call. The PCH may consist of 1 to 10 slots every 25 BP and the AGCH may consist of e.g. 2, 4, 6, 8, 10 or 12 slots every 25 BP.

In addition to these downlink common channels, there is an uplink common channel which allows UTs within a cell to transmit access requests to the network, when it is desired to make a call from the UT. These requests thus occur essentially randomly in time and the channel is accordingly called the random access channel RACH. The RACH consists of e.g. of 2 slots every 3, 4 or 5 BP.

The SAN 1 to satellite 3a, 3b uplinks are located in a frequency band in the region of 5 GHz and the corresponding downlinks are in the region of 7 GHz. The satellite 3a, 3b to UT 1 downlinks are in the region of 2.1 GHz and the corresponding uplinks are in the region of 1.9 GHz, although the invention is not restricted to these frequencies. In this example, the individual TCH/SACCHs and BCCHs are assigned constant individual 25KHz wide frequency bands to provide a TDMA slot sequence as explained with reference to Figure 4.

**Satellite**

A schematic diagram of the major signal processing components of each satellite is given in Figure 5. Signals transmitted from one of the SANs are received by antenna 16 and directed to a detector/multiplexer/de-multiplexer circuit 17. It will be understood that the signal transmitted from the SAN to the satellite contains a large number of TCH/SACCHs that are to be directed to individual UTs by the satellite. To this end, the satellite includes an array 18 of a plurality (for example 163) of antennas that produce individual spot beams that correspond to a cellular configuration as previously described. A beam forming processor circuitry configuration $19_{down}$ receives the various TCH/SACCHs that are de-multiplexed by circuit 17 and assembles them into multiplexed signals directed on 163 outputs to the spot beam antennas 18.

For signals on the uplink from the individual UTs to the SAN, the various transmissions are received by the spot beam antennas 18 and directed to processing circuitry $19_{up}$ which combines the various channels and passes them to the multiplexer configuration in circuit 17 for transmission through the antenna 16 to the SAN. It will be understood that the foregoing description of the satellite circuitry is schematic and for further details, reference is directed to GB-A-2 288 913 supra.

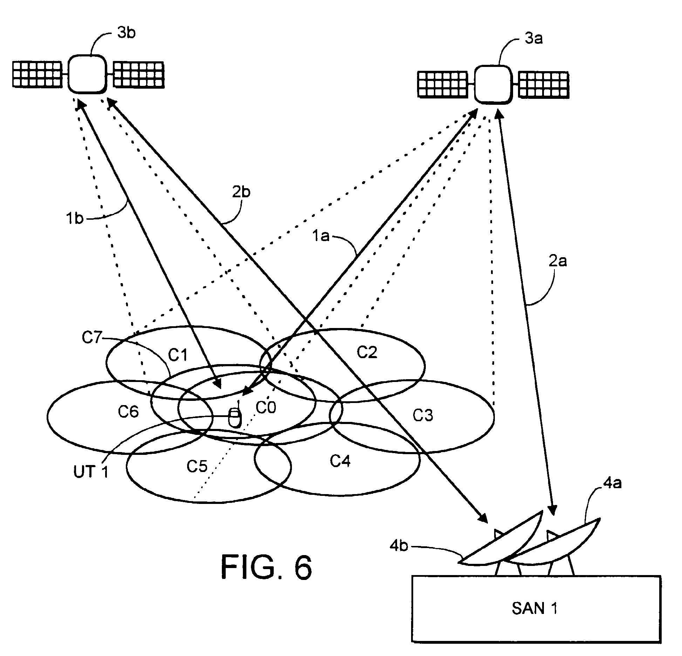

An example of cells C0 - C6 produced by the footprints of seven of the spot beams from antenna 18 of satellite 3a is shown in Figure 6. Also, one of the spot beams from satellite 3b is shown, which produces cell C7. The other beam footprints are omitted for purposes of clarity. The diverse communication paths between SAN 1 and UT 1 are shown. As previously explained, one path 1a, 2a extends between antenna 4a and UT 1 via satellite 3a. The other path 1b, 2b extends between antenna 4b and UT 1 via satellite 3b. These diverse paths make use of cells C0 and C7 of the satellites 3a and 3b.

## User terminal (UT 1)

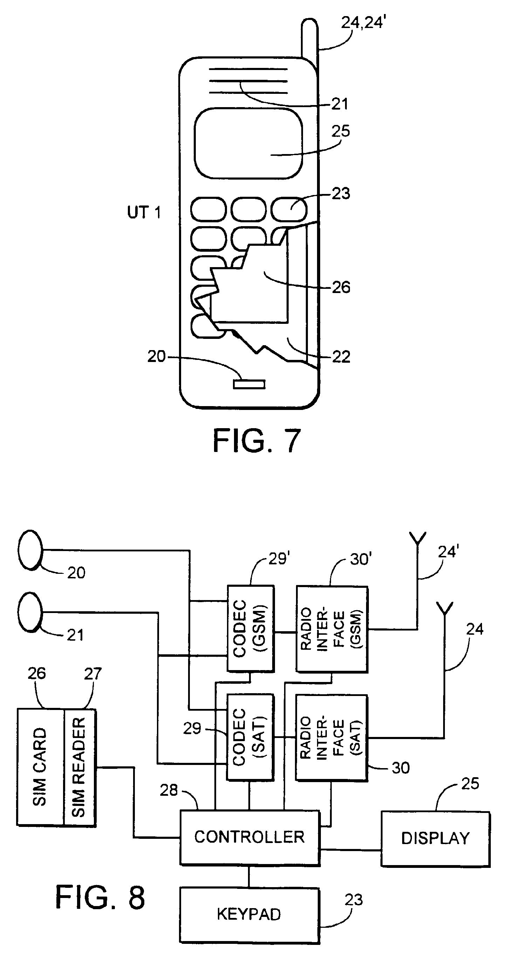

The mobile user terminal UT 1 is shown in more detail in Figures 7 and 8. It comprises a hand held device which is generally similar to a mobile telephone used for conventional terrestrial GSM networks. It is powered by a rechargeable battery (not shown) and is configured to operate either with the local terrestrial cellular network or to roam to the satellite network. Thus, in the example shown in Figure 1, the mobile handset UT 1 can operate either according to a land-based GSM protocol or according to the satellite network protocol. As shown in Figure 5, the handset comprises a microphone 20, an earpiece 21, a battery 22, a keypad 23, antennas 24, 24' and a display 25. The handheld unit UT 1 also includes a subscriber identification module (SIM) smartcard 26. The circuit configuration of the handset UT 1 is shown in block diagrammatic form in Figure 8. The SIM card 26 is received in an SIM card reader 27 coupled to a controller 28, typically a microprocessor. The microphone and loudspeaker 20, 21 are coupled to first and second codecs 29, 29' coupled to conventional radio interfaces 30a, 30b connected to the antennas 24, 24' so as to transmit and receive communication signals, in a manner well known per se. The handset is capable of dual mode operation, with the codec 29, radio interface 30 and antenna 24 being used with the satellite network, and corresponding circuits 29', 30' and 24' being used with the GSM PLMN 9. The antenna 24 comprises a configuration with two switchable directive patterns as will be described in more detail hereinafter.

## Satellite base station (SBS 1)

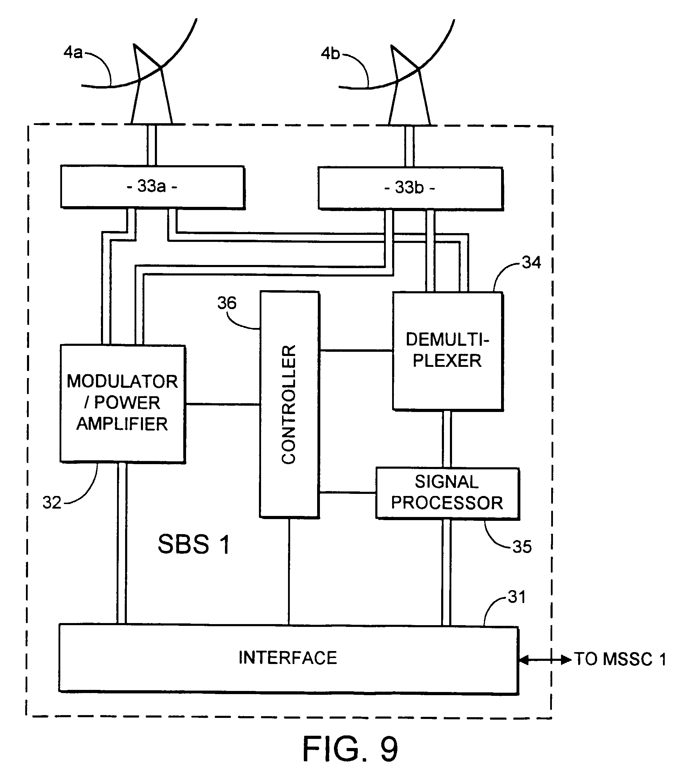

The configuration of the satellite base station SBS1 at SAN will now be described in more detail with reference to Figure 9. SBS1 comprises a network interface 31 providing an interface to MSSC 1, a modulator/power amplifier system 32, first and second feed units 33a, 33b for the dish antennas 4a, 4b, a de-multiplexer 34, a signal processing unit 35 and a controller 36. As previously explained, SAN 1 may include five dish antennas and the connections for only two of them are shown in Figure 7 in order to simplify the explanation.
The interface 31 receives communication signals from MSSC 1, routed from one of the various networks either through gateway GW 1 (Figure 1) or via the backbone network 5. The interface 31 reformats the signals for transmission to the UTs. Several calls are simultaneously supplied to the modulator/power amplifier system 32 and an interleaved TCH/SACCH is produced under the control of controller 36. A number of TCH/SACCHs are produced concurrently on different frequency bands and are fed to either one or both of the antennas 4a, 4b for onward downlink transmission via the satellites to individual user terminals. The feed units 33a, 33b feed the signals to the antennas 4a, 4b.
The antennas also receive uplink signals from the satellites and each feed unit 33a, 33b includes power combiners for combining the signals from the modulator/power amplification system 32 and a circulator for isolating the demultiplexer 34 from the combined signals and directing the combined signals to the respective antennas 4a, 4b.
Uplink signals received from the satellites are directed by the feed units 33a, 33b to the demultiplexer 34, which demultiplexes received uplink TCH/SACCHs and feeds the resulting signals via the signal processing unit 35 to the interface 31 for onward transmission to MSSC 1. The signal processing unit 35 extracts data from the received signals, which are fed to the controller 36 which in turn provides control data for UT 1, which is modulated by modulator 32 onto signals transmitted to the UT, as will be described in more detail later.

## Service provision

The described network can provide service to subscribers in a number of different ways. For example, communication may be provided from UT 1 to UT 2 using the satellite backbone network 5. Alternatively, telephone communication can be established between the telephone set 7 and UT 1 either via SAN 1 and the satellite network, or, through PLMN 9, antenna 10 and link 11. For further description of service options, reference is directed to EP-A-0 869 628.
In the following, a telephone call established between telephone set 7 and UT 1 through SAN 1 and satellite 3a will be considered in more detail.

## Radio link configuration

The TDMA frames which make up the TCH/SACCH, need to achieve synchronisation in order to achieve a satisfactory radio link between the SAN and UT 1. In the network described herein, link control is carried out referenced to each satellite, to ensure that integrity of the TDMA frame structure is maintained at the satellite, notwithstanding transmission delays to and from the satellite and Doppler shifts in frequency due to orbital motion of the satellite. It can be shown that choosing the satellite as the reference position reduces the overall complexity of the link control arrangements.
The issues associated with timing delays and Doppler shift will be considered in turn. Considering timing delays, for a terrestrial, cellular, mobile telephone network, the signal typically takes a few microseconds to travel from a base transmitter site antenna to a mobile station. Consequently, the transmitted TDMA time slot pattern is generally retained at the mobile station. A typical round trip delay for a 35km cell is of the order of ¼ slot. However, in a satellite mobile telephone system with the satellites 3a, 3b in a medium earth orbit, the time taken for signals to travel between a satellite 3a, 3b and a UT 1 is longer than a time slot. In the case of a satellite orbiting at 10355km, the one way propagation time to the satellite's nadir (where the satellite is seen at an elevation of 90° on the Earth) is approximately 34.5 ms, which is comparable with the previously described 40ms frame duration. This situation is further complicated by there being a significant difference between the path length to the cell at the nadir and the path lengths to the cells at the edge of the satellite's footprint. For a satellite orbiting at 10355km, the one way propagation time to a UT which sees the satellite at 0° elevation is approximately 51.6 ms. This leads to significant differences in the times at which bursts arrive at UTs and in the times when UTs are required to transmit in order for their signals to fit in with the TDMA frame structure at the satellite.

As previously mentioned, the up and downlink traffic channel signals are to be nominally synchronised in timing and carrier frequency at the satellite. In relation to timing synchronisation, this means that path delay variations on links to individual UTs need to be compensated as will now be explained.

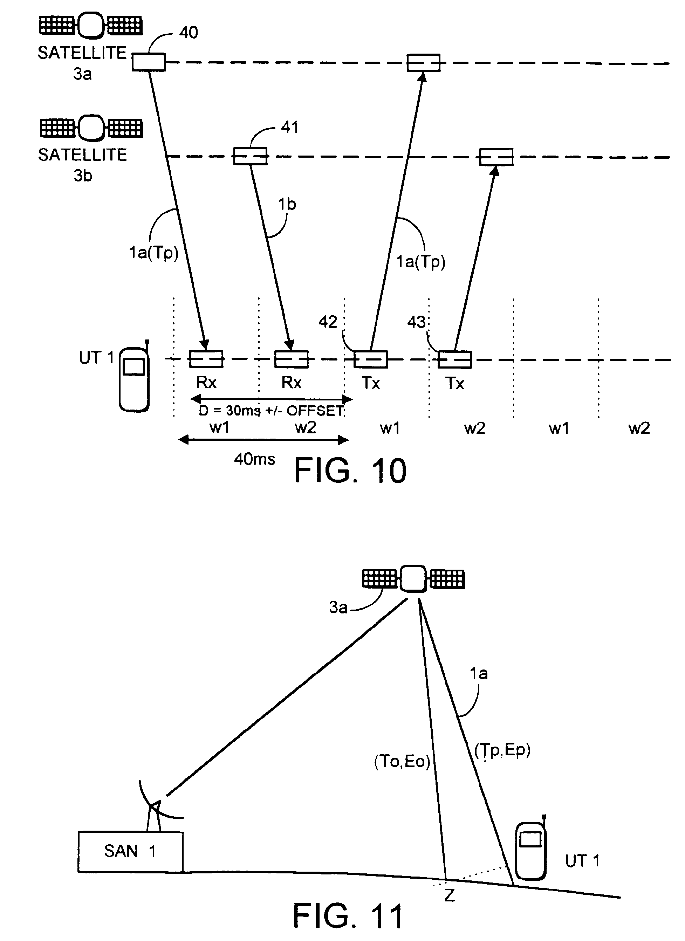

Referring to Figure 10, the transmission of successive downlink TDMA bursts 40, 41 from satellites 3a, b over paths 1a,b, to UT 1 is shown together with uplink bursts 42, 43 from the UT to the satellites. The bursts in this example have a duration of 40/6ms (6.667ms) as previously discussed, and form part of the TCH/SACCH. At UT 1, each 40ms frame N is defined as two 20ms diversity windows w1, w2 for communication with the two satellites 3a,b individually. Considering the downlink burst 40 transmitted from satellite 3a, it is transmitted at a time determined by the synchronisation pattern that is maintained at satellite 3a, over path 1a to UT 1 and received within the 20ms reception window w1. A transmission delay $T_p$ occurs over the path 1a between the satellite 3a and UT 1. The user terminal UT 1 is configured to transmit an uplink burst 42 after a nominal, predetermined time delay D following reception of the downlink burst 40. The uplink burst 42 also is subject to the transmission delay $T_p$ as it travels to the satellite 3a. The time delay D needs to be selected so that the uplink burst 42 is received at the satellite 3a at a time which fits into the periodic pattern of the TDMA structure at the satellite 3a, order to maintain synchronisation at the satellite. In this example, the time delay D is nominally 30ms but is subject to an offset $\varepsilon_t$ to account for variations in location of the UT, as will be explained hereinafter.

after.

Communication between the satellite 3b and the user terminal UT 1 occurs in a similar way. The downlink TDMA burst 41 is received in diversity window w2 at UT 1 from satellite 3b over path 1b and the uplink burst 43 is transmitted to the satellite 3b by the UT after a delay $D+\varepsilon_t$ so as to maintain synchronisation at the satellite 3b. Suitable values for $\varepsilon_t$ for each satellite path are selected individually, as explained hereinafter.

Compensation to achieve the necessary synchronisation is carried out by referencing the timing for bursts transmitted on the path between the satellite and the UT to one of a number of different individual transmission delay values $T_o$ for which a zero offset $\varepsilon_t$ is required. These different, individual transmission delay values to map onto the surface of the Earth as arc-shaped contours Z shown in Figure 3. The arc-shaped contours Z of constant time delay require by definition, zero timing offset, and are referred to as Z-arcs. The location of the UT is considered in relation to one of these contours. When the UT is located on the contour, the timing delay corresponds to the individual value associated with the contour and the value of the timing offset $\varepsilon_t$ needed is zero in order to maintain synchronisation of the uplink and downlink bursts at the satellite. When the UT is positioned away from the contour, a timing offset $\varepsilon_t$ is needed relative to the value at the contour, to compensate for the longer transmission path length between the satellite and the UT.

In this example, each Z-arc delay value defines a path delay class which lies within +/- 1.4 ms of that value, so that 17 delay classes cover the 163 spot beams. Figure 3 shows Z-arcs $Z_n$ superimposed onto the spot beam types. Beam types 0 to 5, for example, have a path with delay variation of only 2.2 ms, and are therefore covered by a single Z-arc. In beam spots with more than one delay class, dotted arcs show the boundaries between delay classes.

The relationship between the timing offset $\varepsilon_t$, the path delay $T_p$ to the UT and the delay $T_o$ associated with an individual Z-arc can be seen from Figure 11 which shows the transmission delays over the paths associated with the satellite 3a. It can be seen that the timing offset, when referenced to the Z-arc, is given by:

$$\varepsilon_t = 2(T_p - T_o) \qquad (1)$$

The factor of two deals with the fact that compensation is needed for both the uplink and the downlink path between the UT and the satellite.

The offset $\varepsilon_t$, which, in this example has a maximum value of +/- 1.4 ms, can be calculated by SBS 1 and periodically sent to UT 1. The SBS 1 knows the Z-arc value corresponding to the delay class for each of one or more diverse paths to which the UT 1 has been allocated. It can determine the delay between itself and satellite 3a by sending and receiving loop-back transmissions. Other delays within the system can be measured or details obtained from the relevant equipment manufacturer, for example, in the case of satellite transponder delays, from the satellite manufacturer, and this information supplied to the SBS 1. Since the SBS 1 knows the various offsets (i.e. the delay D and others) applied by the UT between the received and transmitted bursts, it can use a received burst from the UT to calculate the actual path delay between the SBS and UT 1.

The way in which a UT is allocated a traffic channel will now be described. UT 1 first acquires system time and frequency from a BCCH. To initiate radio access, UT 1 transmits a formatted burst in a prescribed time slot on the RACH carrier frequency. SBS 1 searches for and acquires the UT RACH burst timing. As explained above, by knowing the received RACH time and various fixed offsets, the SBS can work out the actual path delay between the satellite 3a and the UT and therefore decide which Z-arc the UT should use, if the beam has more than one. The assignment of a traffic channel TCH/SACCH and initial pre-corrections together with information concerning the selected Z-arc, are sent to the UT on the AGCH.

During the traffic exchange on the TCH/SACCH, SBS 1 pre-corrects the downlink frame timing of the bursts transmitted from the SAN 1 to the satellite so that the bursts, on arriving at the satellite, achieve the desired synchronisation pattern, that results in zero frame timing offset on Earth along the Z-arc. The UT locks to the corresponding received burst timing from the satellite 3a and pre-corrects and transmits its uplink burst 30ms +/- up to 1.4 ms later (D+$\varepsilon_t$) so as to maintain nominally zero timing error at the satellite 3a. The SBS 1 periodically, for example, once per minute, sends new timing offsets to UT 1, based on continuing measurement of uplink burst timing at SBS 1. Thus referring to Figure 9, the signal processor 35 measures timing errors in the received uplink bursts and based on this information, the controller 36 periodically encodes updated values of $\varepsilon_t$ in SACCH$_{down}$ using modulator 32 for transmission to UT 1.

A similar process occurs for the link established through satellite 3b, between SAN 1 and UT 1, for diversity operation. The bursts of the TCH/SACCH sent through satellite 3b are subject to a corresponding pre-compensation process in which SBS 1 computes timing offsets relative to a Z-arc appropriate for satellite 3b. Furthermore, details of the Z-arc for the added diversity path through satellite 3b are transmitted to the UT from SBS 1. The timing offsets for the added path are also transmitted to UT 1 and used by it to pre-compensate uplink bursts of the TCH/SACCH routed through satellite 3b. Downlink bursts from the SAN to the satellite 3b are pre-corrected relative to the Z-arc for satellite 3b and also to maintain synchronism of the diversity windows w1, w2 at UT 1 for the satellites 3a, 3b.

As previously mentioned, a Doppler shift occurs in the frequency of the bursts transmitted between each satellite 3a,b and UT 1, which unless corrected, can result in bursts shifting in the frequency domain from one allocated slot to another. Compensation in the frequency domain is carried out by defining Z-arcs of zero Doppler frequency offset and performing compensation at UT 1 and at SBS 1 in the same manner as described herein for timing errors, but in respect of errors caused by Doppler shifts. Thus at SBS 1, a frequency pre-compensation and a frequency offset $\varepsilon_d$ is computed relative to a Doppler Z-arc, where:

$$\varepsilon_d = 2(E_d - E_o) \qquad (2)$$

$E_d$ is the Doppler shift for bursts on the path 1a between the satellite 3a and the UT 1, and $E_o$ is the Doppler shift to the Z-arc.

UT 1 thus applies to its transmitted bursts, a frequency shift $F_d$ and the frequency offset $\varepsilon_d$ sent from the SBS in order to achieve frequency compensation, in an analogous manner to the timing compensation process, but in the frequency domain, for the path via satellite 3a, and a corresponding process is carried out for the path via satellite 3b. The frequency offsets are computed at SBS 1 and periodically, updated values are sent to UT 1 on the downlink. Referring to Figure 9, this is achieved by the signal processor 35 measuring frequency deviations in the received uplink bursts and based on this information, the controller 36 periodically encoding updated values of $\varepsilon_d$ in SACCH$_{down}$ using modulator 32 for transmission to UT 1.

## Location Updating

The user terminal, when used with the satellite network can perform a location updating function to provide an estimation of the location of the terminal relative to the earth's surface and to convey the location information to the visited MSSC SAN for use in network initiated access. This is carried out by the SAN measuring the propagation delay and Doppler shift for the signals received and optionally supplemented by measurements made at the UT of differential propagation delay and differential forward link Doppler from two or more of the satellites 3 at the user terminal UT 1 using its controller 28. In the latter case, the resulting measurement positional data is then transmitted from the user terminal to the SAN via satellite 3a. In both cases, the SAN compiles this information and forwards it for storage in VLR$_{SAT}$. This process is described in more detail in our GB-A-2 321 812.

## Antenna diversity

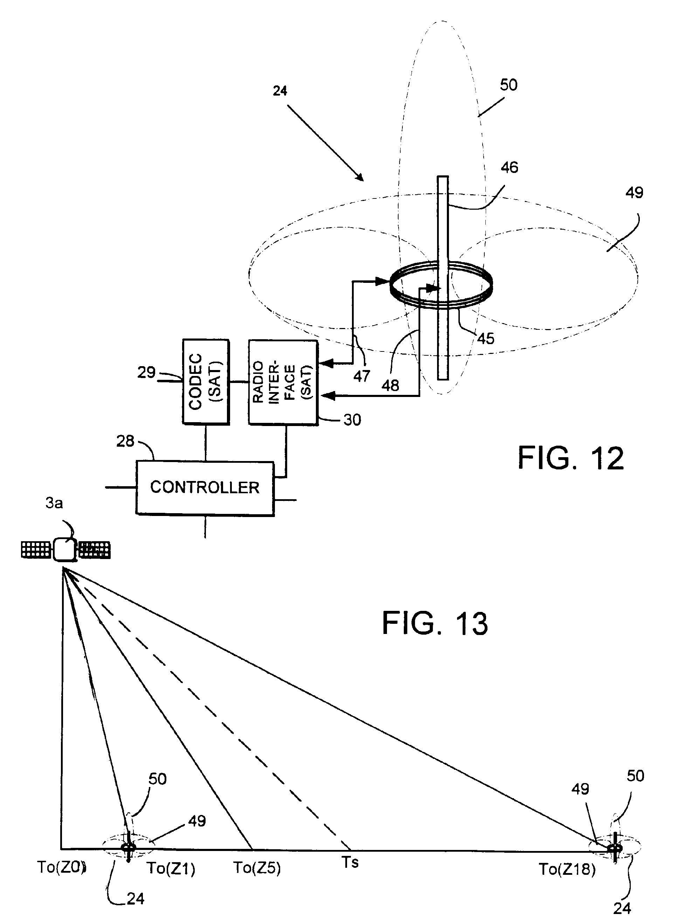

As previously mentioned, UT 1 has two antennas 24, 24' for use with the PLMN 9 and the satellite network respectively. The antenna 24 for the satellite network will now be considered in more detail with reference to Figure 12. It will be understood that the mobile user terminal UT 1 is normally held to the user's head in a vertical or near vertical configuration. The directive pattern of the antenna is configured so that signals can be transmitted to and received from satellites at different positions in the sky relative to the user terminal. Thus, the user terminal needs not only to be able to transmit to and receive from satellites close to the horizon but also overhead i.e. the satellite's nadir.

In order to provide for omni-directional operation, the antenna 24 comprises a configuration of first and second antenna elements 45, 46. The antenna element 45 comprises a loop antenna arranged generally horizontally in use, with an electrical connection 47 to the radio interface circuits 30. The second antenna element 46 comprises a dipole arranged generally vertically in use with an electrical connection 48 to the radio interface circuits 30. The first loop antenna element 45 has a toroidal directive pattern 49, which is suitable for communication with satellites disposed at low angles in the sky relative to the user terminal. The second, dipole element 46 has a vertically extending directive lobe 50 which is suitable for communication with satellites with a large elevational angle, up to and including the satellite nadir. Both antenna elements can be used simultaneously, although according to the invention, improved results are obtained by switching them selectively so that the first dipole element is used for communicating with satellites of low elevational angle and the second element is used for satellites at high elevational angles relative to the horizon.

In accordance with the invention, data concerning the previously described Z-arcs can be used for switching between the antenna elements, as a function of satellite elevation angle.

Referring to Figure 13, it will be seen that the reference time delay $T_0$ associated with each Z-arc is a function of the path length between the satellite 3a and the location of the user terminal UT 1 in the pattern of cells produced by the satellites antenna configuration. This path length is in turn a function of elevational angle. Thus, when the user terminal UT 1 is positioned at the satellites' nadir, so as to be controlled with reference to Z-arc $Z_0$, the corresponding value of $T_0 (Z_0)$ is relatively small whereas, at the extremity of the cell pattern, the value of $T_0 (Z_{18})$ for Z-arc $Z_{18}$ is relatively large. Thus, the value of $T_0$ can be used to provide an indication of elevation angle.

As previously explained, each cell is provided with a cell broadcast channel BCCH which conveys system information to all UTs within the cell in idle mode. The value of $T_0$ corresponding to the Z-arc(s) for a particular cell is included in the BCCH system information and is used by the UTs in the cell to set their TCH reception timing, although this setting process will not be detailed herein in order to simplify the description. Furthermore, in dedicated mode, the system information, including $T_0$ is transmitted in the SACCH for both the cell currently in use and its neighbouring cells, so that in use, during a call, the UT can monitor the reception quality of BCCHs of neighbouring cells and report back to the SBS to assist in making cell handover decisions. The value of $T_0$ for a new cell may additionally be included in the FACCH which is transmitted when a cell handover is to occur or when the network switches into a new diversity condition in which a new path is used or added. Thus the UT is provided by normal use of the network with Z-arc data $T_0$ for the cell currently in use and its neighbours when needed, which can be used for switching between the antenna elements, in accordance with the invention.

From the foregoing description of the radio link configuration, it will be understood that communication between SAN 1 and UT 1 occurs over diverse paths 1a, 2a; 1b, 2b via satellites 3a, 3b. The antenna configuration shown in Figure 12 is switched to select the first or the second antenna element with the most appropriate directive lobe 49, 50 for the diverse paths individually, depending on the elevation angle of the satellites 3a, 3b. The switching is carried out in response to system information concerning the parameter $T_0$ transmitted to UT 1 in the BCCH in idle mode or the SACCH in dedicated mode or in FACCH at the time of a cell hand-over or when the diverse paths are changed, as will now be explained in detail. The path 1a, 2a via satellite 3a will be considered in detail and it will be understood that antenna switching for path 1b, 2b via satellite 3b can be processed separately using the same techniques.

Referring to Figure 13, it can be seen that when the value of $T_0$ is greater than a threshold value $T_S$, the satellite 3a has a relatively low elevational angle in the sky in relation to UT 1 and so the toroidal directive pattern 49 of the first antenna element 45 provides a better signal to noise ratio than the second, vertically disposed dipole element 46 shown in Figure 12. However, if the value of $T_0$ for the cell concerned is less than the threshold value $T_S$, the vertically disposed second, dipole element 46 provides better antenna characteristics because the satellite 3a has a relatively high elevational angle.

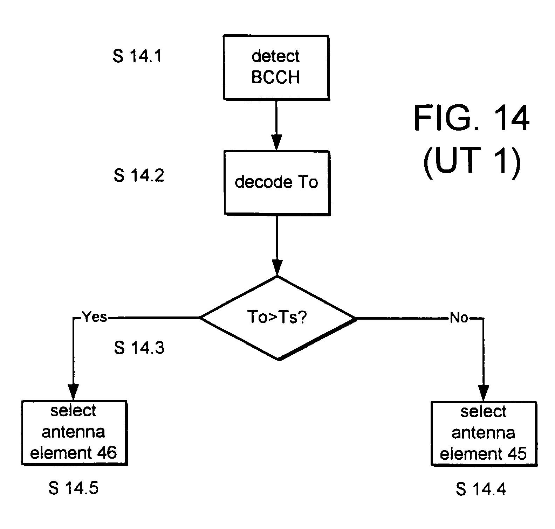

For idle mode, the antenna selection process carried out by UT 1 is shown in Figure 14. At step S14.1, the BCCH for the current cell is detected. At step S14.2, the value of $T_0$ is detected from the BCCH information. This corresponds to the Z-arc for the cell currently in use. At step S14.3, a determination is made of whether the current value of $T_0$ is greater or less than the threshold value $T_S$ indicating whether the satellite is high or low in the sky. If $T_0 > T_S$, the horizontal toroidal directive pattern of the first antenna element 45 is selected at step S14.4, which is suitable for the low elevational angle of the satellite. However, if $T_0 < T_S$, the second antenna element 46 is selected at step S14.5, which is preferred when the satellite has a high elevation.

The antenna selection process can be carried out by controller 28 to select the signals from an appropriate one of the antenna elements 45, 46 fed to the radio interface circuitry 30. The selected element is then used for both transmission and reception in relation to the link to the satellite.

In dedicated mode, UT 1 monitors the reception quality of the BCCHs of neighbouring cells in individual timeslots as previously described and needs to select an antenna element 45, 46 for the individual cell measurements, depending on the elevation angle of the satellite that provides the relevant neighbouring cell. This is carried out by determining the value of $T_0$ for the neighbouring cell from the system information transmitted in the SACCH during dedicated mode in respect of the neighbouring cells and using the decision process shown in Fig. 14, modified so that at step S14.1, the SACCH is detected at $T_0$ for a neighbouring cell is decoded at step S14.2. The value of $T_0$ is then compared with $T_s$ to make the antenna selection The antenna element selection process may be carried for a number of different neighbouring cells.

When a cell handover is required, a cell handover command is transmitted in a FACCH that includes the value of $T_0$ for new cell, which can be used to select the antenna element for the new cell. A decision process corresponding to Figure 14 based on the FACCH rather than BCCH, is carried out in order to compare the value of $T_0$ for the new cell with the threshold value $T_S$ in order to determine which antenna element should be selected.

As previously explained, signal communication between SAN 1 and UT 1 occurs over diverse paths and it will be understood that the signals received in diversity windows w1, w2 shown in Figure 10 can be processed individually with an individual antenna element selection carried out in order to take account of the different elevational angles of satellites 3a, 3b according to the decision process of Fig. 14.

**Maritime mode**

In an alternative mode of operation, UT 1 signals to SAN 1 that it is to operate in a so-called maritime mode in which the UT is likely to be subject to severe conditions of roll and pitch, for example on a ship or in an aircraft. In this configuration, SAN 1 transmits TCH data twice, over the diverse paths 1a, 1b via satellites 3a, 3b such that, referring to Figure 10, the data is received in both diversity windows w1, w2. Optionally, the diverse paths may be through the same satellite but in different overlapping cells with different Z-arcs. In maritime mode, UT 1 dedicates one of the antenna elements to signals received over path 1a and the other antenna element to signals received over path 1b. For example the horizontal, first element 45 is allocated to path 1a and the second vertical element 46 is allocated to path 1b, on a continuous basis, with the antenna elements being switched successively and individually into operative connection with the radio interface 30 for each successive window period w. The transmitted and received signal quality over path 1a will wax and wane as UT 1 pitches and rolls. The signal quality for path 1b will wax and wane in an inverse manner due to the orthogonal nature of the directive patterns. Because data is transmitted to UT 1 twice for successive windows w1, w2, the data can be combined at UT 1 to reduce errors. Thus, the individual antenna elements 45, 46 can selectively detect signals for one of the paths, without the need to monitor $T_0$ from BCCH.

Many further modifications and variations fall within the scope for the invention. For example, although the data $T_0$ has been described as transmitted on the BCCH, FACCH or SACCH, it could be transmitted on any other suitable control channel. Also, whilst the antenna has been described as comprising two different physical antenna elements it will be appreciated that an electronic antenna array could be used with electronically controlled beam patterns.

Although the invention has been described in relation to the ICO™ system, it will be appreciated that it could be equally well applied to any of the satellite mobile telecommunications networks described in Scientific American *supra.*

Also, whilst the user terminals UT have been described herein as mobile telephone handsets, it will be understood that they may be semi-mobile e.g. mounted on a ship or aircraft. The UT may also be stationary e.g. for use as a payphone in a geographical location where there is no terrestrial telephone network.

**Claims**

1.   A method of controlling antenna diversity of a user terminal for a satellite telecommunications network, wherein the user terminal includes an antenna configuration with different selectable directive patterns, the method including receiving system information via a satellite, the system information including data ($T_0$) relating to the elevation of the satellite relative to the user terminal, and selecting the antenna directive pattern as a function of the data.

2.   A method according to claim 1 including comparing the data with a threshold value ($T_s$) and selecting the directive pattern in dependence on the outcome of the comparison.

3.   A method according to claim 1 or 2 wherein the system information comprises data relating to a reference for use in synchronising signals transmitted between the user terminal and the satellite.

4.   A method according to claim 2 or 3 wherein the system information comprises Z-arc data.

5. A method according to any preceding claim including receiving the data at the user terminal in a control channel from the satellite.

6. A method according to claim 5 wherein the satellite network is cellular and including receiving the data in a cell broadcast channel at the user terminal.

7. A method according to claim 5 wherein the control channel includes data concerning the elevation of the satellite for other cells and choosing the antenna directive pattern for another cell on the basis of said data.

8. A method according to claim 7 wherein the data is received in a SACCH or FACCH.

9. A user terminal for a satellite telecommunications system, including an antenna configuration with different selectable directive patterns, receiver circuitry to receive system information via a satellite, the system information including data relating to the elevation of the satellite relative to the user terminal, and means to select the antenna directive pattern as a function of the data.

10. A user terminal according to claim 9 including means (28) for comparing the data with a threshold value ($T_s$) and selecting the directive pattern in dependence on the outcome of the comparison.

11. A user terminal according to claim 9 or 10 wherein the system information comprises data relating to a reference for use in synchronising signals transmitted between the user terminal and the satellite.

12. A user terminal according to any one of claims 9 to 11 wherein the satellite network is cellular and including a receiver to receive the data in a cell broadcast channel at the user terminal.

13. A user terminal according to claim 12 wherein the cell broadcast signal includes data concerning the elevation of the satellite for other cells and including means for choosing the antenna directive pattern for another cell on the basis of said data.

14. A user terminal according to any one of claims 9 to 13 wherein the antenna configuration includes antenna elements for producing a lobe to be disposed generally vertically in use and a lobe to be disposed transversely thereof.

15. A user terminal according to claim 14 wherein the antenna configuration includes a loop antenna element (45) and a dipole antenna element (46).

16. A method of controlling antenna diversity of a user terminal for a satellite telecommunications system wherein a communication traffic channel between the user terminal and a ground based network occurs over diverse paths and the user terminal includes an antenna configuration with different selectable directive patterns, the method including using the different directive patterns of the antenna configuration for the different paths respectively.

17. A method according to claim 16 including signalling to a remote location via the satellite to send a traffic channel to the user terminal such that traffic information is repeated over the two paths, and combining the received traffic information from the paths at the user terminal.

18. A method according to claim 16 or 17 wherein signals from the diverse paths are received in respective diversity time windows (w1, w2) at the user terminal, and including switching between the antenna directive patterns for the respective diversity windows.

19. A user terminal for a satellite telecommunications system wherein a communication traffic channel between the user terminal and a ground based network occurs over diverse paths, the user terminal including an antenna configuration with different selectable directive patterns, and means for using the different directive patterns of the antenna configuration for the different paths respectively.

20. A user terminal according to claim 19 including means for signalling to a remote location via the satellite to send a traffic channel to the user terminal such that traffic information is repeated over the two paths, and means for combining the received traffic information from the paths at the user terminal.

21. A user terminal according to claim 19 or 20 wherein signals from the diverse paths are received in respective diversity time windows (w1, w2) at the user terminal, and including means for switching between the antenna directive patterns for the respective diversity windows.

22. A user terminal according to any one of claims 19 to 21 including receiver circuitry to receive system information via a satellite, the system information including data relating to the elevation of the satellite relative to the user terminal, and the user terminal being selectively operable in a mode wherein the antenna directive pattern is selected as a function of the data.

23. A user terminal according to claim 22 including means (28) for comparing the data with a threshold value ($T_s$) and selecting the directive pattern in dependence on the outcome of the comparison.

**24.** A user terminal according to claim 21 or 22 wherein the system information comprises data relating to a reference for use in synchronising signals transmitted between the user terminal and the satellite.

**25.** A user terminal according to any one of claims 21 to 24 wherein the antenna configuration includes antenna elements for producing a lobe to be disposed generally vertically in use and a lobe to be disposed transversely thereof.

**26.** A user terminal according to claim 25 wherein the antenna configuration includes a loop antenna element (45) and a dipole antenna element (46).

FIG. 1

163 SPOT BEAMS COVERING DOWN TO 0 DEG ELEVATION

FIG. 2

EP 1 052 785 A1

Z-ARCS AND SPOT SHAPES ON EARTH BY BEAM TYPE (163 BEAMS, 10,355 KM.)

FIG. 3

## FIG. 4

## FIG. 5

FIG. 6

FIG. 7

FIG. 8

FIG. 9

FIG. 10

FIG. 11

FIG. 12

FIG. 13

S 14.1 detect BCCH

FIG. 14
(UT 1)

S 14.2 decode To

To>Ts?

Yes

No

S 14.3

select antenna element 46

select antenna element 45

S 14.5

S 14.4

European Patent Office

**EUROPEAN SEARCH REPORT**

Application Number

EP 99 30 3664

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 98 29968 A (AT & T CORP) 9 July 1998 (1998-07-09) * page 1, line 28 - line 33 * * page 7, line 6 - line 10 * * page 13, line 26 - line 36; claims 9,24,27 * | 1,3,4,9, 11 | H04B7/08 H04B7/185 H04B7/10 |
| Y | | 2,5-8, 10,12-26 | |
| Y | US 5 649 306 A (DAILEY KIRK W ET AL) 15 July 1997 (1997-07-15) * column 4, line 45 - column 5, line 20 * | 2,10 | |
| Y | US 5 426 439 A (GROSSMAN OVADIA) 20 June 1995 (1995-06-20) * column 5, line 16 - line 20; figure 6 * | 2,10,14, 15,23-26 | |
| Y,D | US 5 661 724 A (CHENNAKESHU SANDEEP ET AL) 26 August 1997 (1997-08-26) & WO-A-97/23065 (PCT/US96/19429) * column 2, line 44 - line 51 * * column 7, line 8 - line 65 * | 5-8,12, 13,16-22 | TECHNICAL FIELDS SEARCHED (Int.Cl.7) H04B H01Q |

The present search report has been drawn up for all claims

| Place of search | Date of completion of the search | Examiner |
|---|---|---|
| MUNICH | 28 September 1999 | Felsen, J |

EPO FORM 1503 03.82 (P04C01)

EP 1 052 785 A1

**ANNEX TO THE EUROPEAN SEARCH REPORT
ON EUROPEAN PATENT APPLICATION NO.**                    EP 99 30 3664

This annex lists the patent family members relating to the patent documents cited in the above–mentioned European search report.
The members are as contained in the European Patent Office EDP file on
The European Patent Office is in no way liable for these particulars which are merely given for the purpose of information.

28-09-1999

| Patent document cited in search report | | Publication date | Patent family member(s) | | Publication date |
|---|---|---|---|---|---|
| WO 9829968 | A | 09-07-1998 | NONE | | |
| US 5649306 | A | 15-07-1997 | BR | 9504678 A | 08-10-1996 |
| | | | CA | 2156967 A,C | 17-03-1996 |
| | | | CN | 1123476 A | 29-05-1996 |
| | | | DE | 19533247 A | 28-03-1996 |
| | | | FR | 2724773 A | 22-03-1996 |
| | | | GB | 2293277 A,B | 20-03-1996 |
| | | | IT | RM950612 A | 18-03-1996 |
| | | | JP | 8102609 A | 16-04-1996 |
| US 5426439 | A | 20-06-1995 | GB | 2259811 A | 24-03-1993 |
| US 5661724 | A | 26-08-1997 | AU | 1148097 A | 14-07-1997 |
| | | | CA | 2240736 A | 26-06-1997 |
| | | | CN | 1209233 A | 24-02-1999 |
| | | | EP | 0868790 A | 07-10-1998 |
| | | | WO | 9723065 A | 26-06-1997 |

EPO FORM P0459

For more details about this annex : see Official Journal of the European Patent Office, No. 12/82

24